# EUROPEAN PATENT APPLICATION

(11) **EP 3 078 588 A1**
(43) Date of publication of application: **12.10.2016**
(21) Application number: 16163745.9
(22) Date of filing: 04.04.2016
(51) Int. Cl.: B64C 11/06, F04D 29/056, F04D 29/059, F04D 29/32, F02K 3/06

(54) **FAN BEARINGS FOR A TURBINE ENGINE**

(30) Priority: 06.04.2015 US 201514679096
(71) Applicant: General Electric Company, Schenectady, NY 12345 (US)
(72) Inventor: VAN DER MERWE, Gert J., Cincinnati, OH Ohio 45215 (US); MILLER, Brandon Wayne, Cincinnati, OH Ohio 45215 (US); NIERGARTH, Daniel Alan, Cincinnati, OH Ohio 45215 (US)
(74) Representative: Williams, Andrew Richard

(57) **Abstract**

A gas turbine engine including a core engine and a variable pitch fan arranged in flow communication with the core engine is provided. The variable pitch fan includes a plurality of blades coupled to a disk (42), the blades and disk configured to rotate together about an axial direction of the engine. A rotatable front hub may be provided over a front end of the variable pitch fan, including the disk. The gas turbine engine additionally includes a plurality of trunnion mechanisms (92) coupling each of the plurality of fan blades to a respective disk segment (90) at the disk. Each trunnion mechanism (92) includes a bearing having one or more components formed of a nonferrous material, decreasing a weight of the respective trunnion mechanism and allowing for, e.g., a smaller front hub.

## Description

### FIELD

The present subject matter relates generally to a fan for a gas turbine engine, or more particularly to fan bearings for a gas turbine engine.

### BACKGROUND

A gas turbine engine generally includes a fan and a core arranged in flow communication with one another. Additionally, the core of the gas turbine engine general includes, in serial flow order, a compressor section, a combustion section, a turbine section, and an exhaust section. In operation, an airflow is provided from the fan to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gasses through the combustion section drives the combustion section and is then routed through the exhaust section, e.g., to atmosphere. In particular configurations, the turbine section is mechanically coupled to the compressor section by a shaft extending along an axial direction of the gas turbine engine.

The fan includes a plurality of blades having a radius larger than the core of the gas turbine engine. The fan and the plurality of blades are typically driven by the shaft. A rotatable hub can be provided covering at least a portion of the fan and rotating along with the fan.

For at least some gas turbine engines, the fan is a variable pitch fan. However, the components associated with or accommodating varying a pitch of the plurality of blades can result in the rotatable hub being quite large, which can lower an efficiency of the gas turbine engine in providing the airflow through the fan to the core. Specifically, with certain gas turbine engines, a minimum size of the rotatable hub is dictated by the number and/or length of the plurality of blades. Additionally, the components associated with or accommodating varying the pitch of the plurality of blades tends to increase the rotatable hub from such a minimum size.

Accordingly, a variable pitch fan for gas turbine engine including components allowing for a reduction in size of the rotatable hub would be beneficial. More particularly, a variable pitch fan for a gas turbine engine including components allowing for a reduction in size of the rotatable hub, and in turn, a higher fan blade count and lower fan blade length would be particularly useful.

### BRIEF DESCRIPTION

Aspects and advantages of the invention will be set forth in part in the following description, or may be obvious from the description, or may be learned through practice of the invention.

In one exemplary aspect of the present disclosure, a gas turbine engine is provided. The gas turbine engine defines an axial direction and includes a core engine and a variable pitch fan arranged in flow communication with the core engine. The variable pitch fan includes a disk and a plurality of fan blades coupled to the disk. The disk and the plurality of fan blades are configured to rotate about the axial direction of the gas turbine engine. The gas turbine engine also includes a plurality of trunnion mechanisms coupling each of the plurality of fan blades to the disk, each trunnion mechanism including a bearing having one or more components comprised of a non-ferrous material.

In another exemplary aspect of the present disclosure, a gas turbine engine is provided. The gas turbine engine defines an axial direction and a radial direction and includes a core engine and a variable pitch fan arranged in flow communication with the core engine. The variable pitch fan includes a disk and at least eight fan blades coupled to the disk. The fan blades define a radius along the radial direction. The disk and the fan blades are configured to rotate about the axial direction of the gas turbine engine. The gas turbine engine also includes a plurality of trunnion mechanisms coupling each of the fan blades to the disk. Each trunnion mechanism includes a pair of bearings, each bearing having one or more components comprised of a non-ferrous material. The gas turbine engine also includes a rotatable hub covering the disk and defining a radius along the radial direction. The rotatable hub is configured such that a ratio of the radius of fan blades to the radius of the rotatable hub is less than or equal to about 0.45.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic cross-sectional view of a gas turbine engine according to an exemplary embodiment of the present subject matter.
FIG. 2 is perspective view of a variable pitch fan of the exemplary gas turbine engine of FIG. 1 in accordance with an exemplary embodiment of the present disclosure.
FIG. 3 is a perspective view of a disk and associated trunnion mechanisms of the exemplary variable pitch fan of FIG. 2.
FIG. 4 is a perspective view of a segment of the disk and one of the associated trunnion mechanisms of FIG. 3.
FIG. 5 is an exploded view of the trunnion mechanism shown in FIG. 4.
FIG. 6 a cross-sectional view of the segment of the disk and the trunnion mechanism of FIG. 4 with a blade attached to the trunnion mechanism.
FIG. 7 is an enlarged segment of the cross-sectional view of FIG. 6.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows.

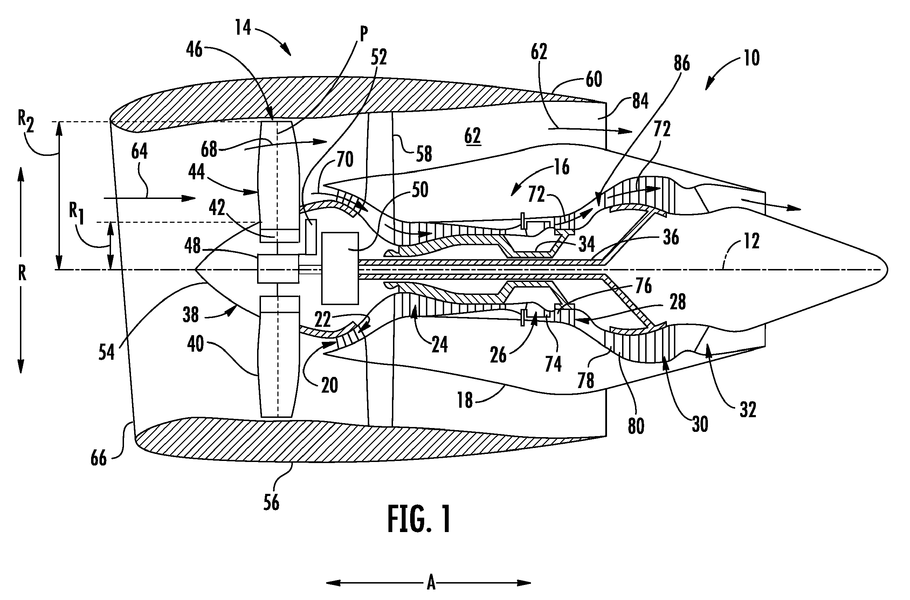

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline 12 provided for reference) and a radial direction R. In general, the turbofan 10 includes a fan section 14 and a core turbine engine 16 disposed downstream from the fan section 14.

The exemplary core turbine engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

Additionally, for the embodiment depicted, the fan section 14 includes a variable pitch fan 38 having a plurality of fan blades 40 coupled to a disk 42 in a spaced apart manner. As depicted, the fan blades 40 extend outwardly from disk 42 generally along the radial direction R. Each of the plurality of fan blades 40 define a leading edge 44, or upstream edge, and a tip 46 defined at a radially outer edge of each respective fan blade 40. Each fan blade 40 is also rotatable relative to the disk 42 about a pitch axis P by virtue of the fan blades 40 being operatively coupled to a suitable actuation member 48 configured to collectively vary the pitch of the fan blades 40 in unison. The fan blades 40, disk 42, and actuation member 48 are together rotatable about the longitudinal axis 12 by LP shaft 36 across a power gear box 50. The power gear box 50 includes a plurality of gears for stepping down the rotational speed of the LP shaft 36 to a more efficient rotational fan speed.

Additionally, the fan blades 40 are operatively coupled to a pitch correction device 52 (e.g., a counterweight device, or a suitable pitch lock device) across the actuation member 48 such that the pitch correction device 52 is said to be remote from (i.e., not coupled directly to) the plurality of fan blades 40. The counterweight device 52 may have any suitable configuration enabling the counterweight device 52 to function as described herein (e.g., to not be coupled directly to the fan blades 40). However, in other exemplary embodiments, any other suitable pitch correction/ counterweight device 52 may be used.

Referring still to the exemplary turbofan engine 10 of FIG. 1, including the variable pitch fan 38, the disk 42 of the variable pitch fan 38 is covered by rotatable front hub 54 aerodynamically contoured to promote an airflow through the plurality of fan blades 40. Notably, an efficiency of air flowing over the rotatable hub 54 into core 16 (as will be described below) can be affected by the overall size of the rotatable hub 54 along the radial direction R relative to a size of the plurality of blades 40 along the radial direction R. More specifically, a hub to blade radius ratio R₁:R₂ is directly correlated with the efficiency by which air flows over the rotatable hub 54 and into the core 16. For example, as the hub to blade radius ratio R₁:R₂ increases, airflow over the rotatable hub 54 and into the core 16 becomes more difficult, and therefore less efficient. By contrast, as the hub to blade radius ratio R₁:R₂ decreases, airflow over the rotatable hub 54 into the core 16 becomes easier, and therefore more efficient. As used herein, the "hub to blade radius ratio" is defined herein as a ratio of a radius R₁ of the rotatable hub 54 along the radial direction R from the longitudinal centerline 12 at the leading edge 44 of the blades 40 over a radius R₂ of the blades 40 from the bade tips 46 to the longitudinal centerline 12 also at the leading edge 44 of the blades 40.

In that regard, it is desirable to decrease the hub to fan radius ratio R₁:R₂ in order to make the airflow over rotatable hub 54 and into core more efficient. As such, because rotatable hub 54 houses the disk 42, the size of rotatable hub 54 (e.g., along the radial direction R) is in part dictated by the size of disk 42 (e.g., along the radial direction R). Further, the size of the disk 42 is, in part, dictated by the amount of force the components must be capable of withstanding. Due to the rotational speed at which the fan 38 rotates about the longitudinal centerline 12 during operation of the turbofan engine 10, a centrifugal force-which directly correlates to a mass/ weight of the components and a length of the blades 40-on the components can be great. Thus, it is desirable to reduce a weight of the disk 42 in order to facilitate reducing the size of the disk 42, the radius R₁ of rotatable hub 54, and the hub to fan radius ratio R₁:R₂.

As will be described in greater detail below, certain embodiments of the present disclosure allow for such a reduction in the hub to fan radius ratio R₁:R₂ by reducing a weight of certain components of the fan 38 (i.e., certain bearings, discussed below). Accordingly, less centrifugal force may be generated, allowing for smaller and more compact components that are not required to withstand heightened centrifugal forces. More particularly, in the exemplary embodiment depicted, the hub to fan ratio R₁:R₂ for the turbofan engine 10 has been reduced to less than or equal to about 0.45. However, in other exemplary embodiments the hub to fan ratio R₁:R₂ may instead be less than or equal to about 0.35, less than or equal to about 0.30, or alternatively may have any other suitable hub to fan radius ratio R₁:R₂ . It should be appreciated, that as used herein, terms of approximation, such as "about," refer to being within a ten percent (10%) margin of error.

Referring still to the exemplary turbofan engine 10 of FIG. 1, the exemplary fan section 14 additionally includes an annular fan casing or outer nacelle 56 that circumferentially surrounds the fan 38 and/or at least a portion of the core turbine engine 16. It should be appreciated that the nacelle 56 may be configured to be supported relative to the core turbine engine 16 by a plurality of circumferentially-spaced outlet guide vanes 58. Moreover, a downstream section 60 of the nacelle 56 may extend over an outer portion of the core turbine engine 16 so as to define a bypass airflow passage 62 therebetween.

During operation of the turbofan engine 10, a volume of air 64 enters the turbofan 10 through an associated inlet 66 of the nacelle 56 and/or fan section 14. As the volume of air 64 passes across the fan blades 40, a first portion of the air as indicated by arrows 68 is directed or routed into the bypass airflow passage 62 and a second portion of the air as indicated by arrow 70 is directed or routed into the LP compressor 22. The ratio between the first portion of air 68 and the second portion of air 70 is commonly known as a bypass ratio. The pressure of the second portion of air 70 is then increased as it is routed through the high pressure (HP) compressor 24 and into the combustion section 26, where it is mixed with fuel and burned to provide combustion gases 72.

The combustion gases 72 are routed through the HP turbine 28 where a portion of thermal and/or kinetic energy from the combustion gases 72 is extracted via sequential stages of HP turbine stator vanes 74 that are coupled to the outer casing 18 and HP turbine rotor blades 76 that are coupled to the HP shaft or spool 34, thus causing the HP shaft or spool 34 to rotate, thereby supporting operation of the HP compressor 24. The combustion gases 72 are then routed through the LP turbine 30 where a second portion of thermal and kinetic energy is extracted from the combustion gases 72 via sequential stages of LP turbine stator vanes 78 that are coupled to the outer casing 18 and LP turbine rotor blades 80 that are coupled to the LP shaft or spool 36, thus causing the LP shaft or spool 36 to rotate, thereby supporting operation of the LP compressor 22 and/or rotation of the fan 38.

The combustion gases 72 are subsequently routed through a jet exhaust nozzle section 32 of the core turbine engine 16 to provide propulsive thrust. Simultaneously, the pressure of the first portion of air 68 is substantially increased as the first portion of air 68 is routed through the bypass airflow passage 62 before it is exhausted from a fan nozzle exhaust section 84 of the turbofan 10 also providing propulsive thrust. The HP turbine 28, the LP turbine 30, and the jet exhaust nozzle section 32 at least partially define a hot gas path 86 for routing the combustion gases 72 through the core turbine engine 16.

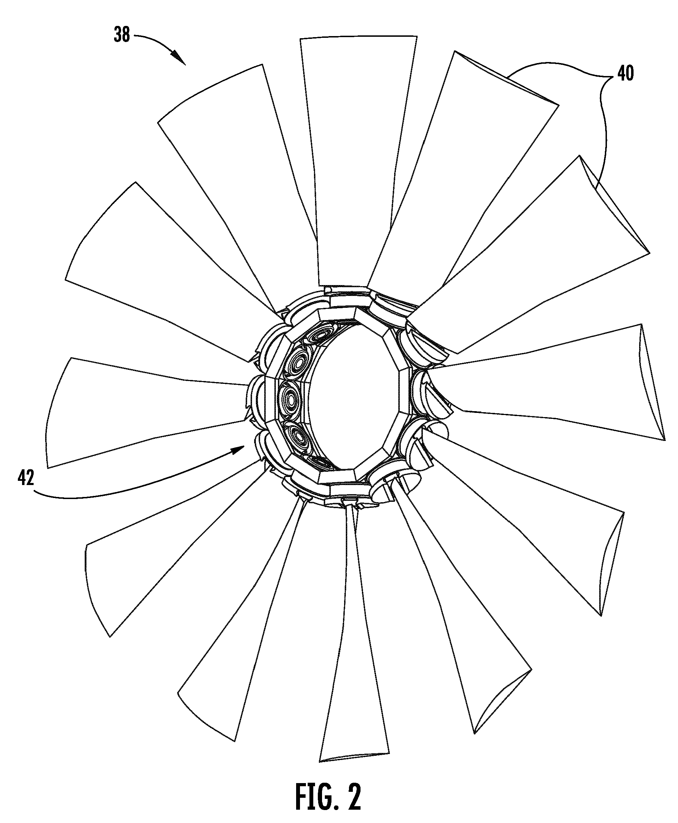

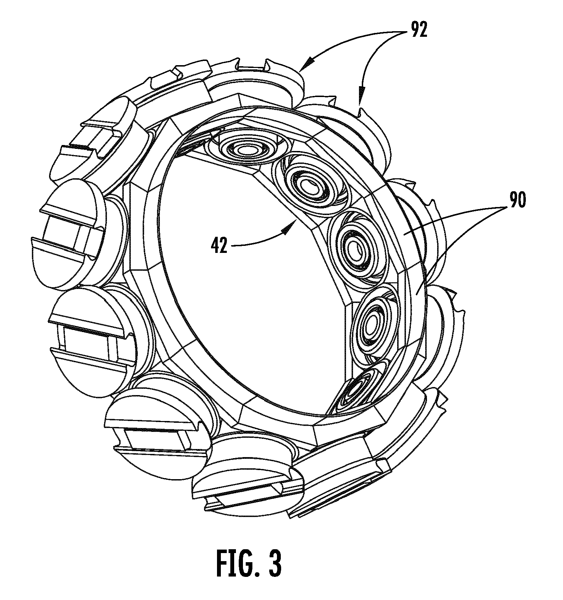

Referring now to FIGS. 2 and 3 the fan 38 will be described in greater detail. FIG. 2 provides a perspective view of the fan 38 of the exemplary turbofan engine 10 of FIG. 1, and FIG. 3 provides a perspective view of the disk 42 of the fan 38 of the exemplary turbofan engine 10 of FIG. 1.

For the exemplary embodiment depicted, the fan 38 includes twelve (12) fan blades 40. From a loading standpoint, such a blade count enables the span of each fan blade 40 to be reduced such that the overall diameter of fan 38 is also able to be reduced (e.g., to about twelve feet in the exemplary embodiment). That said, in other embodiments, fan 38 may have any suitable blade count and any suitable diameter. For example, in one suitable embodiment, the fan may have at least eight (8) fan blades 40. In another suitable embodiment, the fan may have at least twelve (12) fan blades 40. In yet another suitable embodiment, the fan may have at least fifteen (15) fan blades 40. In yet another suitable embodiment, the fan may have at least eighteen (18) fan blades 40.

Additionally, the disk 42 includes a plurality of disk segments 90 that are rigidly coupled together or integrally molded together in a generally annular shape (e.g., a polygonal shape). One fan blade 40 is coupled to each disk segment 90 at a trunnion mechanism 92 that facilitates retaining its associated fan blade 40 on disk 42 during rotation of disk 42 (i.e., trunnion mechanism 92 facilitates providing a load path to disk 42 for the centrifugal load generated by fan blades 40 during rotation about engine centerline axis 12), while still rendering its associated fan blade 40 rotatable relative to disk 42 about pitch axis P. Notably, the size and configuration of each trunnion mechanism 92 directly influences the diameter of disk 42. Particularly, larger trunnion mechanisms 92 tend to occupy larger circumferential segments of disk 42 and, hence, tend to result in a larger diameter of disk 42. On the other hand, smaller trunnion mechanisms 92 tend to occupy smaller circumferential segments of disk 42 and, hence, tend to result in a smaller diameter of disk 42.

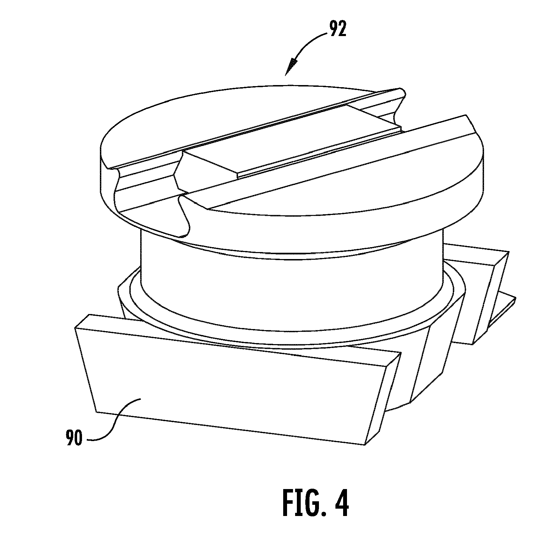

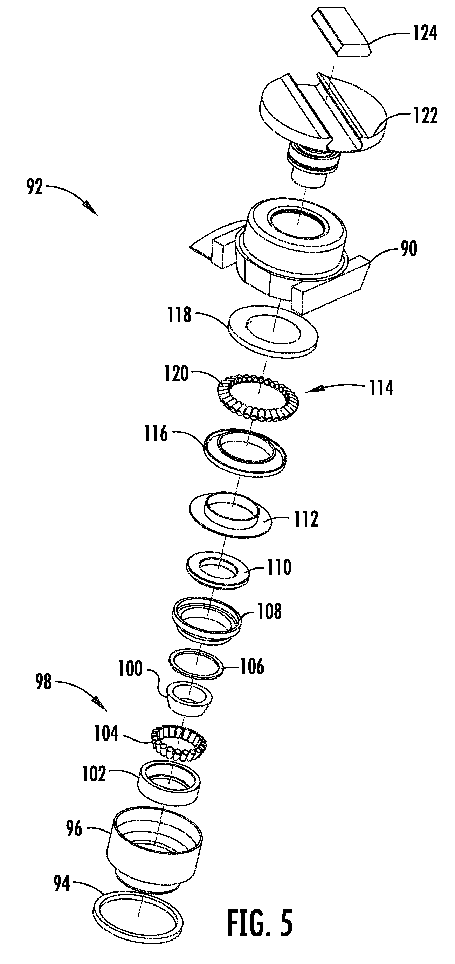

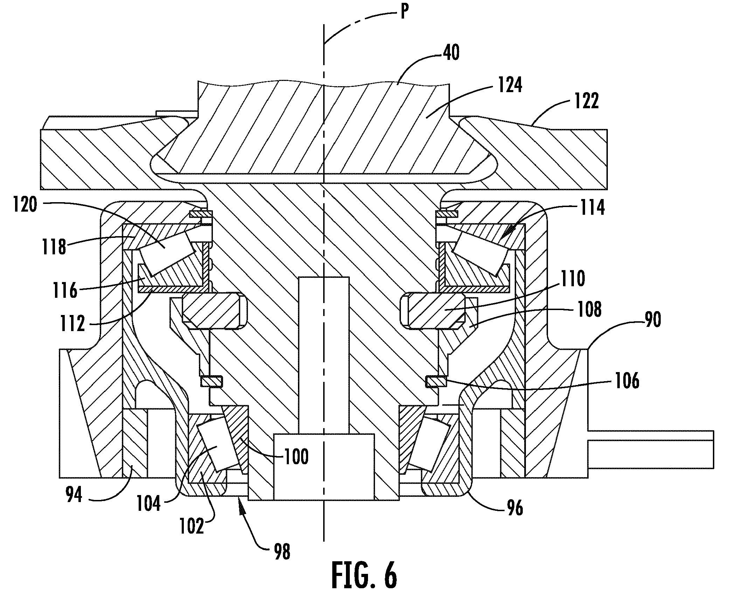

Referring now generally to FIGS. 4 through 7, an individual disk segment 90 and trunnion mechanism 92 in accordance with an exemplary embodiment of the present disclosure is depicted. In the exemplary embodiment depicted, each trunnion mechanism 92 extends through its associated disk segment 90 and includes: a coupling nut 94; a lower bearing support 96; a first line contact bearing 98 (having, for example, an inner race 100, an outer race 102, and a plurality of rollers 104); a snap ring 106; a key hoop retainer 108; a segmented key 110; a bearing support 112; a second line contact bearing 114 (having, for example, an inner race 116, an outer race 118, and a plurality of rollers 120); a trunnion 122; and a dovetail 124. For use as bearings 98, 114, at least the following types of line contacting type rolling element bearings are contemplated: cylindrical roller bearings; cylindrical roller thrust bearings; tapered roller bearings; spherical roller bearings; spherical roller thrust bearings; needle roller bearings; and tapered roller needle bearings. It should be appreciated, however, that in other exemplary embodiments, trunnion mechanism 92 may additionally or alternatively include any other suitable type of bearing. For example, in other exemplary embodiments, the trunnion mechanism 92 may include roller ball bearings or any other suitable bearing.

When assembled, coupling nut 94 is threadably engaged with disk segment 90 so as to sandwich the remaining components of trunnion mechanism 92 between coupling nut 94 and disk segment 90, thereby retaining trunnion mechanism 92 attached to disk segment 90.

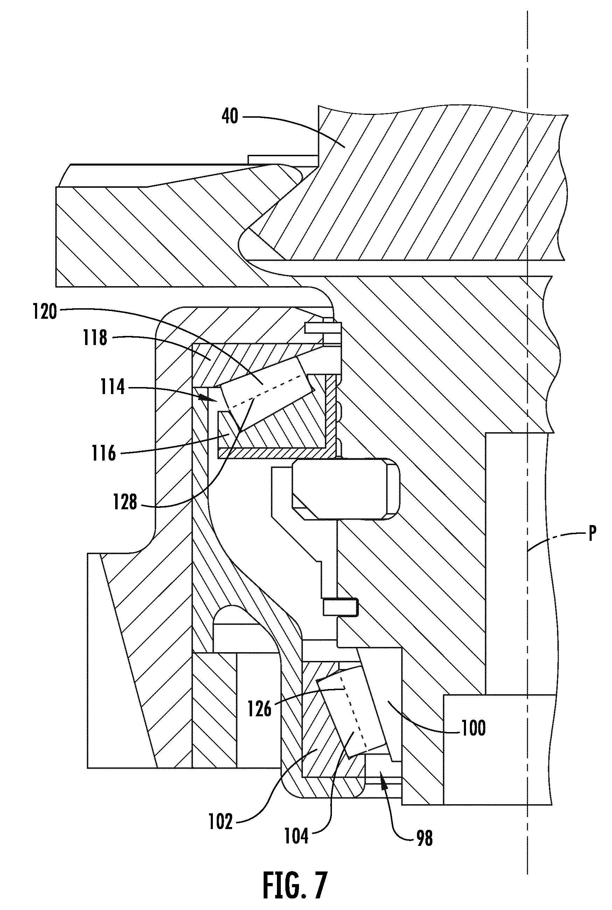

Referring now particularly to FIG. 7, in the exemplary embodiment depicted, the first line contact bearing 98 is oriented at a different angle than the second line contact bearing 114 (as measured from a centerline axis 126 of rollers 104 relative to pitch axis P, and from a centerline axis 128 of rollers 120 relative to pitch axis P). More specifically, line contact bearings 98, 114 are preloaded against one another in a face-to-face (or duplex) arrangement, wherein centerline axes 126, 128 are oriented substantially perpendicular to one another. It should be appreciated, however, that in other exemplary embodiments, the line contact bearings 98, 114 may instead be arranged in tandem so as to be oriented substantially parallel to one another.

Notably, the farther away the bearings 98, 114 are from the pitch axis P, the greater the number of rollers 104, 120 that can be included (due to the greater amount of room). With an increased number of roller 104, 120, a centrifugal load on the bearings 98, 114 may be distributed amongst more rollers 104, 120, reducing an amount of such load borne by each individual roller 104, 120. However, to facilitate making trunnion mechanism 92 more compact, it is desirable to locate its associated bearings 98, 114 closer to pitch axis P, thereby enabling more trunnion mechanisms 92 to be assembled on disk 42 and, hence, more fan blades 40 to be coupled to disk 42 for any given diameter of disk 42. For the embodiment depicted, the increased centrifugal loads borne by each individual roller 104, 120 due to the placement of the bearings 98, 114 closer the pitch axis P (and thus a reduced number of rollers 104, 120) are accommodated by providing the trunnion mechanism 92 with line contact bearings 98, 114, as opposed to angular point contact ball bearings. Thus, the trunnion mechanism 92 is able to be made more compact because line contact bearings 98, 114 are better able to withstand larger centrifugal loads without fracturing or plastically deforming. More specifically, line contact bearings 98, 114 have larger contact surfaces and, therefore, can withstand larger centrifugal loads than point contact ball bearings, for example. Thus, line contact bearings 98, 114 can be spaced closer to pitch axis P than point contact ball bearings.

Furthermore, for the exemplary embodiment depicted, an amount of centrifugal force generated by the trunnion mechanisms 92 themselves (and thus an amount of centrifugal force that must be accommodated by the trunnion mechanisms 92) is reduced by forming one or more components of the first line contact bearing 98 and/or the second line contact bearing 114 of a nonferrous material. Such a configuration may reduce a weight/ mass of the respective bearings 98, 114 and of the trunnion mechanism 92 as a whole.

For example, in certain exemplary embodiments of the present disclosure, one or both of the first line contact bearing 98 and second line contact bearing 114 may include one or more components comprised of a ceramic material or a nickel titanium alloy material. More particularly, with reference to the first line contact bearing 98, one or more of the rollers 104, the inner race 100, and the outer race 102 may be comprised of a nonferrous material, such as a ceramic material or a nickel titanium alloy material. Additionally, with reference to the second line contact bearing 114, one or more of the rollers 120, the inner race 116, and the outer race 118 may also be comprised of a nonferrous material, such as a ceramic material or a nickel titanium alloy material. As used herein, "ceramic material" refers to any type of ceramic material suitable for use in bearings, including, but not limited to, Silicone Nitride (Si3N4), Zirconia Oxide (ZrO2), Alumina Oxide (Al2O3), and Silicon Carbide (SiC). Additionally, as used herein "nickel titanium alloy material" refers to any metal alloys of nickel and titanium, sometimes referred to as nitinol, suitably for use in bearings.

By forming one or more of the components of the first line contact bearing 98 and/or the second line contact bearing 114 of a nonferrous material, such as a ceramic material or nickel titanium alloy material, the trunnion mechanisms 92 may define a reduced overall weight. Thus, the centrifugal forces on the trunnion mechanisms 98, generated by the trunnion mechanisms 92 themselves (i.e., a "dead load"), during rotation of the fan 38 about the longitudinal centerline 12 may be reduced (as such trunnion mechanisms 92 are not having to support the additional weight during operation). For example, in certain exemplary embodiments, forming one or more of the components of the first line contact bearing 98 and/or the second line contact bearing 114 of a nonferrous material can reduce a dead load on the trunnion mechanisms 92 during rotation of the fan 38 by as much as ten percent (10%) or fifteen percent (15%). Accordingly, the overall size of the trunnion mechanisms 92 may be reduced even further. More particularly, such a configuration may allow the bearings 98, 114 to be positioned even closer to the pitch axis P (as fewer rollers are required), reducing the size of the trunnion mechanisms 92 even greater.

Additionally, or alternatively, in certain exemplary embodiments, one or more of the components of the first line contact bearing 98 and/or the second line contact bearing 114, such as one or more of the rollers 104, 120, the inner races 100, 116, and the outer races 102, 118 of the first and second line contact bearings 98, 114, respectively, may be comprised of material having a relatively low Young's modulus, such as a Young's modulus less than or equal to about 25,000,000 psi. For example, in certain exemplary embodiments, one or more of the above components of the first and/or second line contact bearings 98, 114 may be comprised of material having a Young's modulus less than or equal to about 20,000,000 psi, less than or equal to about 17,000,000 psi, less than or equal to about 15,000,000 psi, or less than or equal to about 14,000,000 psi. Such an exemplary embodiment may allow the respective components to withstand an increased amount of force, such as an increased amount of centrifugal force, as such components may elastically deform during rotation of the fan 38. For example, when a component undergoes an elastic deformation, an increased contact surface area may be defined between the component and an adjacent component. For example, in certain embodiments wherein the rollers 104 of the first line contact bearing 98 are comprised of a material having a relatively low Young's modulus, the rollers 104 may at least partially elastically deform during operation, such that an increased contact surface area is defined between, e.g., the rollers 104 and the inner race 100 and/or the outer race 102, allowing for a greater distribution of force between the components.

By contrast, however, in other exemplary embodiments, one or more of the components of the first line contact bearing and/or the second line contact bearing 98, 114 may instead be comprised of material having a relatively high Young's modulus, such as a Young's modulus greater than or equal to about 35,000,000 psi, greater than or equal to about 40,000,000 psi, or greater than or equal to about 45,000,000 psi. Such a configuration may allow for, e.g., bearings 98, 114 having an increased stiffness and thus may allow for more accurate and precise operation of the respective bearings.

The above-described embodiments facilitate providing a gas turbine engine with a smaller variable pitch fan that can generate larger amounts of thrust. Particularly, the above-described embodiments facilitate providing a gas turbine engine with a variable pitch fan having, e.g., a higher blade count and a lower blade length, and/or a lower hub to fan radius ratio. Such an increase in the fan's efficiency can result in a decreased fuel burn during operation. As discussed above, the above benefits are allowed at least in part by providing trunnion mechanisms with thrust carrying bearings comprised of non-ferrous materials that have an increased load carrying capacity and generate less centrifugal force during rotation of the fan. Thus, such bearings are, e.g., better able to withstand increased centrifugal loads associated with higher blade counts, and/or able to be reduced in size to accommodate a reduction in the hub to fan radius ratio.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A gas turbine engine defining an axial direction, the gas turbine engine comprising:
   a core engine;
   a variable pitch fan arranged in flow communication with the core engine, the variable pitch fan including a disk and a plurality of fan blades coupled to the disk, the disk and the plurality of fan blades configured to rotate about the axial direction of the gas turbine engine; and
   a plurality of trunnion mechanisms coupling each of the plurality of fan blades to the disk, each trunnion mechanism including a bearing having one or more components comprised of a non-ferrous material.
2. The gas turbine engine of clause 1, wherein the bearing of each trunnion mechanism includes one or more components comprised of a ceramic material.
3. The gas turbine engine of any preceding clause, wherein the bearing of each trunnion mechanism includes one or more components comprised of a nickel titanium alloy material.
4. The gas turbine engine of any preceding clause, wherein the bearing of each trunnion mechanism includes rollers, an inner race, and an outer race, wherein one or more of the rollers, the inner race, and the outer race are comprised of a non-ferrous material.
5. The gas turbine engine of any preceding clause, wherein the rollers, the inner race, and the outer race are each comprised of a non-ferrous material.
6. The gas turbine engine of any preceding clause, wherein the bearing of each trunnion mechanism includes one or more components comprised of a material having a Young's modulus less than or equal to about 20,000,000 psi.
7. The gas turbine engine of any preceding clause, wherein the bearing of each trunnion mechanism includes one or more components comprised of a material having a Young's modulus greater than or equal to about 35,000,000 psi.
8. The gas turbine engine of any preceding clause, wherein the bearing of each trunnion mechanism is a line contact bearing.
9. The gas turbine engine of any preceding clause, wherein the gas turbine engine further defines a radial direction, the gas turbine engine further comprising
   a rotatable hub covering the disk and defining a first radius along the radial direction, wherein each of the blades defines a second radius along the radial direction, and wherein a ratio of the first radius to the second radius is less than or equal to about 0.45.
10. The gas turbine engine of any preceding clause, wherein the ratio of the first radius to the second radius is less than or equal to about 0.35.
11. The gas turbine engine of any preceding clause, wherein the ratio of the first radius to the second radius is less than or equal to about 0.30.
12. The gas turbine engine of any preceding clause, wherein the variable pitch fan includes between eight and twenty fan blades coupled to the disk.
13. A gas turbine engine defining an axial direction and a radial direction, the gas turbine engine comprising:
   a core engine;
   a variable pitch fan arranged in flow communication with the core engine, the variable pitch fan including a disk and at least eight fan blades coupled to the disk, the fan blades defining a radius along the radial direction, the disk and the fan blades configured to rotate about the axial direction of the gas turbine engine;
   a plurality of trunnion mechanisms coupling each of the fan blades to the disk, each trunnion mechanism including a pair of bearings, each bearing having one or more components comprised of a non-ferrous material; and
   a rotatable hub covering the disk and defining a radius along the radial direction, the rotatable hub configured such that a ratio of the radius of fan blades to the radius of the rotatable hub is less than or equal to about 0.45.
14. The gas turbine engine of any preceding clause, wherein each bearing of each trunnion mechanism includes one or more components comprised of a ceramic material.
15. The gas turbine engine of any preceding clause, wherein each bearing of each trunnion mechanism includes one or more components comprised of nickel titanium allow material.
16. The gas turbine engine of any preceding clause, wherein each bearing of each trunnion mechanism is a line contact bearing.
17. The gas turbine engine of any preceding clause, wherein each bearing of each trunnion mechanism includes one or more components comprised of a material having a Young's modulus less than or equal to about 20,000,000 psi.
18. The gas turbine engine of any preceding clause, wherein each bearing of each trunnion mechanism includes one or more components comprised of a material having a Young's modulus greater than or equal to about 35,000,000 psi.
19. The gas turbine engine of any preceding clause, wherein each bearing of each trunnion mechanism includes rollers, an inner race, and an outer race, wherein one or more of the rollers, the inner race, and the outer race of each bearing are comprised of a non-ferrous material.
20. The gas turbine engine of any preceding clause, wherein the radius of fan blades to the radius of the rotatable hub is less than or equal to about 0.35.

## Claims

1. A gas turbine engine defining an axial direction, the gas turbine engine comprising:
a core engine (16);
a variable pitch fan (38) arranged in flow communication with the core engine, the variable pitch fan including a disk (42) and a plurality of fan blades (40) coupled to the disk, the disk and the plurality of fan blades configured to rotate about the axial direction of the gas turbine engine; and
a plurality of trunnion mechanisms (92) coupling each of the plurality of fan blades to the disk, each trunnion mechanism including a bearing (98, 114) having one or more components comprised of a non-ferrous material.

2. A gas turbine engine defining an axial direction and a radial direction, the gas turbine engine comprising:
a core engine (16);
a variable pitch fan (38) arranged in flow communication with the core engine, the variable pitch fan including a disk (42) and at least eight fan blades (40) coupled to the disk, the fan blades defining a radius along the radial direction, the disk and the fan blades configured to rotate about the axial direction of the gas turbine engine;
a plurality of trunnion mechanisms (92) coupling each of the fan blades to the disk, each trunnion mechanism including a pair of bearings (98, 114), each bearing having one or more components comprised of a non-ferrous material; and
a rotatable hub (54) covering the disk (42) and defining a radius along the radial direction, the rotatable hub configured such that a ratio of the radius of fan blades (40) to the radius of the rotatable hub (54) is less than or equal to about 0.45.

3. The gas turbine engine of claim 1 or claim 2, wherein the bearing of each trunnion mechanism includes one or more components comprised of a ceramic material.

4. The gas turbine engine of claim 1 or claim 2, wherein the bearing of each trunnion mechanism includes one or more components comprised of a nickel titanium alloy material.

5. The gas turbine engine of claim 1, wherein the bearing of each trunnion mechanism includes rollers, an inner race, and an outer race, wherein one or more of the rollers, the inner race, and the outer race of the or each bearing are comprised of a non-ferrous material.

6. The gas turbine engine of claim 5, wherein the rollers, the inner race, and the outer race are each comprised of a non-ferrous material.

7. The gas turbine engine of any one of claims 1 to 6, wherein the bearing of each trunnion mechanism includes one or more components comprised of a material having a Young's modulus less than or equal to about 20,000,000 psi.

8. The gas turbine engine of any one of claims 1 to 6, wherein the bearing of each trunnion mechanism includes one or more components comprised of a material having a Young's modulus greater than or equal to about 35,000,000 psi.

9. The gas turbine engine of any preceding claim, wherein the bearing of each trunnion mechanism is a line contact bearing.

10. The gas turbine engine of claim 1, wherein the gas turbine engine further defines a radial direction, the gas turbine engine further comprising
a rotatable hub covering the disk and defining a first radius along the radial direction, wherein each of the blades defines a second radius along the radial direction, and wherein a ratio of the first radius to the second radius is less than or equal to about 0.45.

11. The gas turbine engine of claim 10, wherein the ratio of the first radius to the second radius is less than or equal to about 0.35.

12. The gas turbine engine of claim 10, wherein the ratio of the first radius to the second radius is less than or equal to about 0.30.

13. The gas turbine engine of claim 1, wherein the variable pitch fan includes between eight and twenty fan blades coupled to the disk.

14. The gas turbine engine of claim 2, wherein the radius of fan blades to the radius of the rotatable hub is less than or equal to about 0.35.
